Europäisches Patentamt

European Patent Office

Office européen des brevets

(11) Publication number: **0 072 688**
**B1**

(12) **EUROPEAN PATENT SPECIFICATION**

(45) Date of publication of patent specification: **26.11.86**

(51) Int. Cl.⁴: **B 62 K 21/12**

(21) Application number: **82304302.1**

(22) Date of filing: **16.08.82**

(54) Cycle handlebars apparatus.

(30) Priority: **18.08.81 JP 122788/81 u**
**18.03.82 JP 39015/82 u**
**18.03.82 JP 39019/82 u**
**11.06.82 JP 87744/82 u**

(43) Date of publication of application:
**23.02.83 Bulletin 83/08**

(45) Publication of the grant of the patent:
**26.11.86 Bulletin 86/48**

(84) Designated Contracting States:
**DE FR GB IT NL**

(56) References cited:
**FR-A- 619 800**
**FR-A- 677 744**
**GB-A- 313 362**
**GB-A- 578 359**
**GB-A- 587 945**
**GB-A-1 138 463**
**US-A-2 180 617**

(73) Proprietor: **SHIMANO INDUSTRIAL COMPANY LIMITED**
**77, 3-cho Oimatsu-cho Sakai-shi**
**Osaka (JP)**

(72) Inventor: **Nagano, Masashi**
**74-19, Midorigaoka**
**Izumi-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a handlebars apparatus for a cycle.

Conventionally, cycle handlebars are constructed with a handlebar extending horizontally through a tubular handlebar-holding member which extends horizontally from a projecting portion provided at the upper portion of the handlebar stem and extends radially outwardly therefrom, being fixed to the handlebar-rolling portion with the aid of a clamping bolt. As a result, when a cyclist rides the cycle, a loading is exerted on the handlebar-holding portion of the handlebars in the direction of tightening, so that the handlebar must be rigidly secured by the clamping bolt. As a result, mounting and dismounting of the handlebar tends to be rather difficult and time-consuming. If the handlebar is not rigidly secured due to incomplete tightening or looseness of the clamping bolt, then when the handlebar is subjected to a rotational load it may inadvertently rotate to displace the handlebar grip portions downwardly with the result that the cyclist is often in danger of falling over.

In addition with such conventional cycle handlebars which use only one handlebar, the separation between the grip portions provided at both ends of the handlebar cannot be adjusted unless the handlebar is replaced by another handlebar of different size. Also, since the handlebar holding portion and the handlebar fixed thereto are in fixed disposition relative to the handlebar stem, then should it be desired to change the height of the grip portions, it will be necessary to adjust the handlebar stem disposition vertically with respect to the front fork supporting the stem. This involves a particularly time consuming and cumbersome procedure. US—A—2 180 617 discloses a handlebars apparatus for a cycle comprising a handlebar stem and a pair of cranked left-hand and right-hand handlebars with hand grip portions, said handlebar stem having at its upper portion a longitudinally extending handlebar support means with handlebar support portions for mounting respective ones of said left-hand and right-hand handlebars so as to be rotationally adjustable about the longitudinal axis of the said handlebar support portions, and having a fixed means for securing said left-hand and right-hand handlebars in desired angular positions relative to said handlebar stem, said handlebar support portions being inclined outwardly towards their upper portions away from each other either side of a central longitudinal axis so as to support respective handlebar portions held therein extending at an angle from said central longitudinal axis and from each other and being inclined rearwardly away from said central longitudinal axis so as to extend longitudinally rearwardly relative to a said bicycle in use of the apparatus so that rotational adjustment of the handlebars provides adjustment of both the width and height of the handlebars at said grip portions thereof.

According to US—A—2 180 617 however the support portions are inclined relative to each other in a horizontal plane only so that in a normal arrangement with the handlebars extending at or above the level of the support portions, rotation of the handlebars so as to provide a reduction of the width would at the same time provide an increase in height i.e. the direct opposite of the required result where it is desired to adjust the handlebars for a smaller rider. Furthermore rotation of the handlebars would also move the grip portions away from the rider which again is the opposite of the required result of adjustment to suit a smaller rider.

It is an object of the present invention to avoid or minimize one or more of the above disadvantages.

The present invention provides a handlebars apparatus for a cycle comprising a handlebar stem and a pair of cranked left-hand and right-hand handlebars with hand grip portions, said handlebar stem having at its upper portion a longitudinally extending handlebar support means with handlebar support portions for mounting respective ones of said left-hand and right-hand handlebars so as to be rotationally adjustable about the longitudinal axis of the said handlebar support portions, and have a fixed means for securing said left-hand and right-hand handlebars in desired angular positions relative to said handlebar stem, said handlebar support portions being inclined outwardly towards their upper portions away from each other either side of a central longitudinal axis so as to support respective handlebar portions held therein extending at an angle from said central longitudinal axis and from each other and being inclined rearwardly away from said central longitudinal axis so as to extend longitudinally rearwardly relative to a said bicycle in use of the apparatus so that rotational adjustment of the handlebars provides adjustment of both the width and height of the handlebars at said hand grip portions thereof characterized in that the said handlebar support portions are inclined rearwardly towards their upper portions whilst extending in generally the same direction as that in which said central handlebar stem longitudinal axis extends so that said rotational adjustment of the said handlebars results in a simultaneous increase or decrease in both width and height.

With an apparatus of the present invention the lower ends of the left-hand and right-hand handlebars are mounted in handlebar support portions of the handlebar support means and the load imposed on each handlebar is borne directly by the handlebar support means, in other words, the fixing means itself of the handlebars is not subjected to a significant load, whereby even when the handlebars are not rigidly secured to the handlebar support means by the fixing means, they are unlikely to be unintentionally displaced and upsetting of the rider on or even from the cycle is substantially avoided.

In addition, the handlebars can be arranged to be readily rotatably adjustable relative to the handlebar support portions thereby facilitating adjustment of the separation between the grip portions of the handlebars to suit riders of different stature.

Further preferred features and advantages of the invention will appear from the following detailed description given by way of example of some preferred embodiments illustrated with reference to the accompanying drawings wherein:

Fig. 1 is a perspective view of the general known type of cycle handlebars to which the present invention relates, fixed to a front fork of the cycle;

Fig. 2 is a longitudinal section of the handlebars of Fig. 1 shown on a slightly larger scale;

Fig. 3 is a perspective view of the upper portion of the handlebar stem alone;

Fig. 4 is a corresponding view of a modified handlebar stem upper portion;

Fig. 5 is a longitudinal section of a first handlebars embodiment of the invention;

Fig. 6 is a section taken on line VI—VI in Fig. 5;

Fig. 7 is a plan view of the handlebar stem alone of the first embodiment of Fig. 5;

Figs. 8 and 9 are plan and side views illustrating adjustment of grip portion separation with the handlebars of the invention;

Figs. 10 to 14 are views of further handlebars of the same general type:

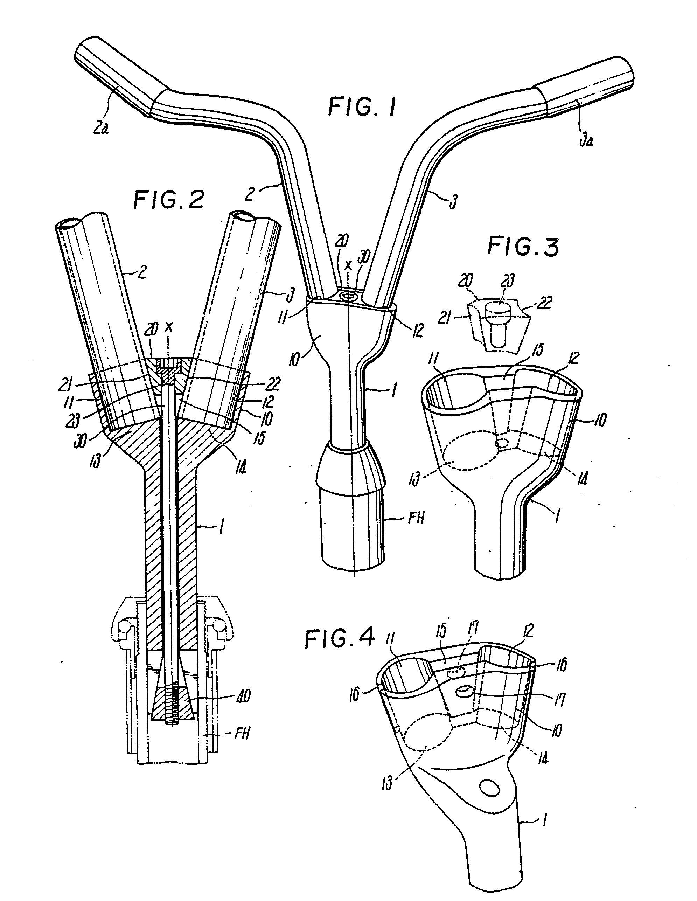

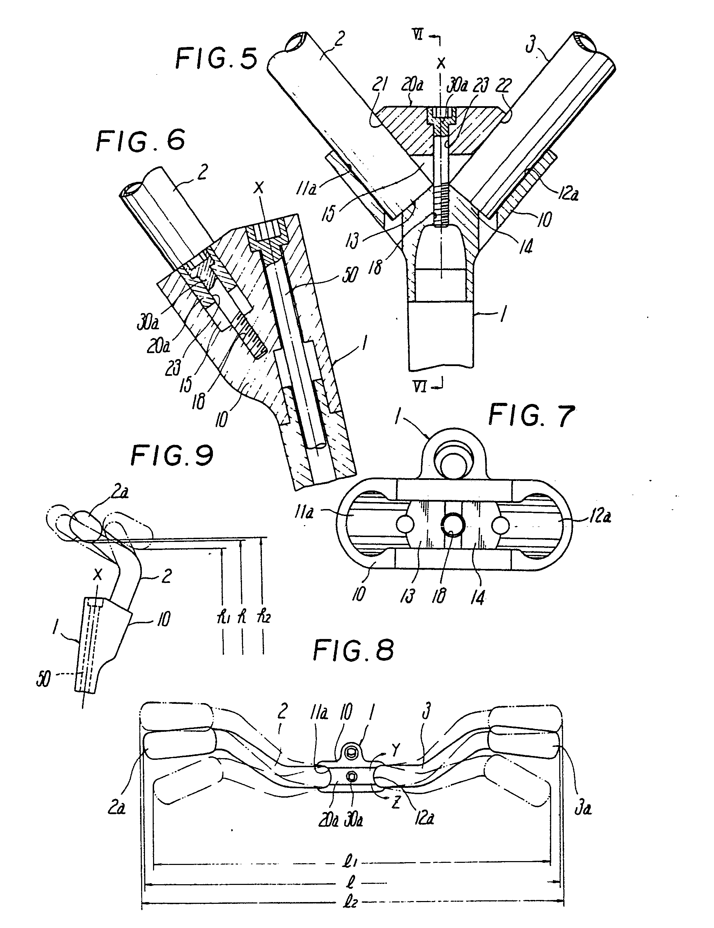

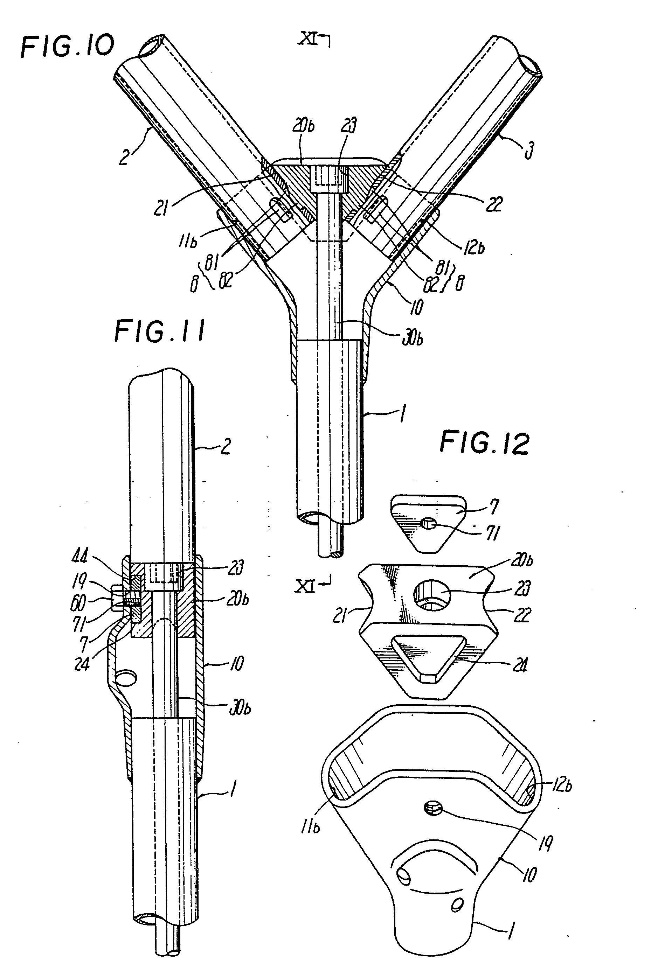

Fig. 10 is a longitudinal section of another handlebars corresponding to Figs. 2 and 5;

Fig. 11 is a section taken on the line XI—XI in Fig. 10;

Fig. 12 is a perspective exploded view of the support portion of the embodiment of Fig. 10;

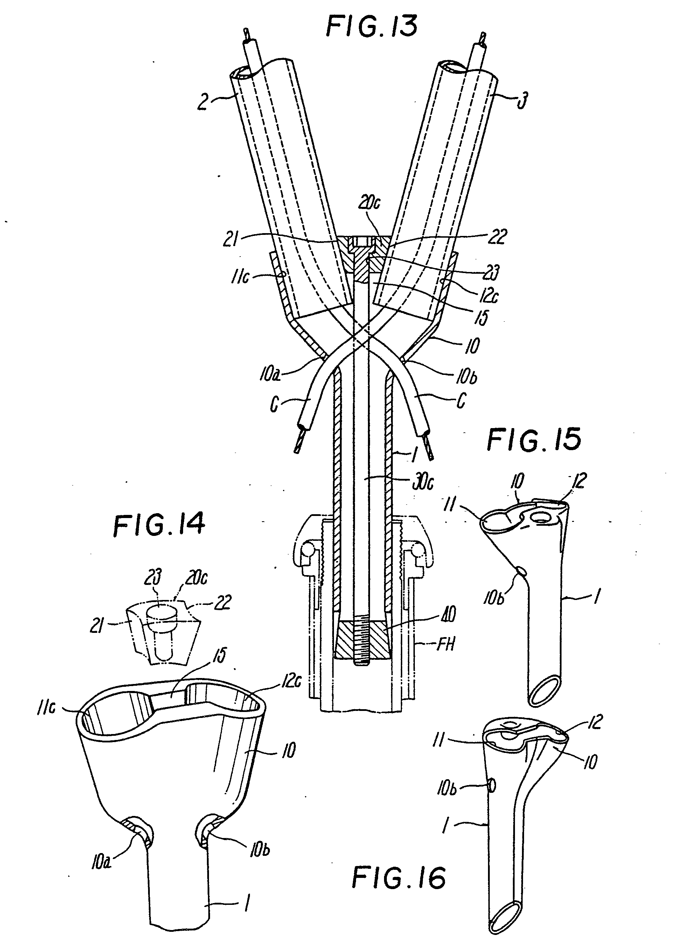

Fig. 13 is a longitudinal section of a still further handlebars corresponding to Figs. 2, 5 and 10;

Fig. 14 is a perspective view of the upper portion of the handlebar stem of the handlebars of Fig. 13; and

Figs. 15 and 16 are perspective views of modified examples of the handlebar stem of further handlebars of the present invention.

Fig. 1 shows a handlebars apparatus of the general type to which the invention relates comprising a handlebar stem 1 mounted in the upper end of a front fork FH of a cycle and a pair of discrete, left-hand and right-hand, handlebars 2 and 3.

Fig. 2 is a perspective view of the upper portion of the handlebar stem 1 alone of a modified handlebars of the same general type. The stem 1 is provided with an integrally formed handlebar support means 10 which extends generally lengthwise of the handlebar stem 1 and has handlebar support portions in the form of upwardly facing bores 11 and 12.

The handlebar support bores 11 and 12 each have a round inner periphery so that the left-hand and right-hand bars 2 and 3 are rotatably insertable in said bores 11 and 12, and are disposed on opposite sides (off-side and near-side) of the cycle with respect to the longitudinal centre line X of the handlebar stem 1 and inclined outwardly sideways of the cycle so that the open upper ends of the handlebar support bores 11 and 12 are directed away from the centre line X.

The handlebar support bores 11 and 12 are blind and their bottom ends 13, 14 serve to receive the lower ends of the left-hand and right-hand handlebars 2 and 3 mounted in the handlebar support bores 11 and 12.

The handlebars 2 and 3 are inserted at their lower ends downwardly into the handlebar support bores 11 and 12 and rotated around their longitudinal axes until the respective grip portions 2a and 3a are disposed to suit the requirements of the cyclist, whereupon they are fixed in place relative to the handlebar stem 1 by suitable fixing means.

The fixing means may, for example, as shown in Fig. 2, comprise an inverted generally frustum-form wedge member 20 and a clamping bolt 30. The wedge member 20 has inclined, slightly concave, faces 21 and 22 which contact opposed side faces of the left-hand and right-hand handlebars 2 and 3 within the handlebar support bores 11 and 12, and a central vertical through-bore 23 with a stepped portion. The wedge member 20 is disposed in a slot or groove 15 interconnecting the two handlebar support bores 11 and 12. The screwthreaded end of the clamping bolt 30 is passed through the wedge member bore 23 and as it is screwed into a suitable nut means (described below) urges the wedge member 20 downwardly, whereby the handlebars 2 and 3 disposed in the handlebar support bores 11 and 12 are pressed against the inner peripheral walls and ends 13, 14 of the handlebar support bores 11 and 12. The clamping bolt 30 is conveniently a draw-up bolt, for example an expander bolt, which screwthreadedly engages nut means such as a draw-up cone 40, for example, an expander cone, housed within a lower portion of the handlebar stem 1. Alternatively, the bolt 30 could be formed separately from the draw-up bolt, but the use of the draw-up bolt avoids the need for a separate clamping bolt thereby reducing the number of parts required, simplifying the construction of the handlebars apparatus, and operations therewith, and improving the appearance thereof. With a separate clamping bolt 30, the wedge member 20 need only be shifted radially outwardly relative to the central longitudinal axis X of the handlebar stem 1 and a threaded bore for the bolt 30 provided in the handlebar stem 1, or the handlebar support bores 11 and 12 need only be formed in a portion displaced radially outwardly relative to the central axis X and a threaded bore for the bolt 30 formed in the stem 1. The width of the connecting groove 15 may be smaller than the diameter of each handlebar support bore 11 or 12 as shown in Fig. 3, or may be equal thereto. Moreover, the connecting groove 15 could be dispensed with if, for example, there is used an inverted generally U-shaped wedge member 20 whose limbs enter respective ones of the handlebar support bores 11 and 12.

Another form of handlebar support means is shown in Fig. 4, in which like parts are indicated by like reference numbers and has one or more (two in the drawing) slits 16 at the sides of the handlebar support bores 11, 12, the respective parts separated by said slits 16 being resliently displacable relative to each other, and horizontal through-bores 17 being provided in the opposed walls of said respective parts for receiving a clamping bolt (not shown) therethrough. Tightening of the clamping bolt biases the separated parts towards each other reducing the diameter of the handlebar support bores 11 and 12 thereby securely clamping therein the left-hand and right-hand handlebars. In this case, it is preferred to displace the handlebar support means 10 or the clamping bolt relative to the central axis $X$ of the handlebar stem 1 as shown in Fig. 4.

Yet another form of fixing means that could be used has a handlebar support means 10 formed separately from the handlebar stem 1, said support means 10 being formed of a resiliently deformable material, such as synthetic resin, and secured to the upper portion of the handlebar stem 1 and having horizontal through-bores, so that a clamping bolt inserted therethrough and tightened resiliently to deform the handlebar support bores 11 and 12 to reduce their diameter in the same way as in Fig. 4, thereby acts to secure the handlebars 2 and 3 in the support bores 11 and 12.

Also, whilst the abutment portions or support bore ends 13 and 14 of the handlebar stem 1 as described above are large enough to close the lower end faces of the respective handlebar support bores 11 and 12, such closing is not indispensable. In fact, the abutment portions 13 and 14 need only be sufficient to support the handlebars 2 and 3.

In the above-described forms of construction, the lower ends of the left-hand and right-hand handlebars 2 and 3 extend into the handlebar support bores 11 and 12 and are received on the abutment portions 13 and 14, the wedge member 20 are inserted into the connecting groove 15 between the handlebar support bores 11 and 12 and contacts at its inclined faces 21 and 22 the outer surfaces of respective ones of the handlebars 2 and 3, and the clamping bolt 30 of the draw-up bolt is inserted into the handlebar stem 1 and screwthreadedly engages with the tapered draw-up nut means 40 within the lower portion of the handlebar stem 1, the wedge member 20 moving downwardly as the clamping bolt 30 is tightened, whereby the handlebars 2 and 3 are pressed against the inner peripheries of the handlebar support bores 11 and 12 and secured therein. In practice the lower portion of the handlebar stem 1 will of course, prior to tightening of the clamping bolt 30, be inserted into the front fork $FH$, and then the bolt 30 tightened also to clamp the stem 1 in the front fork $FH$.

Figs. 5 and 6 illustrate a first embodiment of the present invention wherein, in accordance with the present invention, the handlebar support bores 11 and 12 are inclined rearwardly longitudinally of the cycle as well as laterally outwardly thereof. In this case a wedge member 20a constructed similarly to that in Fig. 2 is used as the fixing means for the handlebars 2 and 3 and a screwthreaded member 30a therefor formed separately from the draw-up bolt 50 for the handlebar stem 1 securing. A threaded bore 18 formed in the support means 10 is provided for engagement by the screw member 30a.

Other parts in the embodiment of Figs. 5 and 6 correspond to those in the embodiment of Fig. 2, and are indicated by like reference numerals.

In the embodiment of Figs. 5 and 6, the handlebar supports bores 11a and 12a are inclined at an angle of about 40° to either side of the central axis $X$ of the handlebar stem 1 (laterally outwardly of the cycle) and at an angle of about 15 to 25° longitudinally rearwardly of the cycle independently of the permanent inclination of the handlebar stem 1.

The reason for the above arrangement is that the left-hand and right-hand handlebars 2 and 3 mounted in the handlebar support bores 11a and 12a are rotatable so that the grip portions of the handlebars 2 and 3 are positionally adjustable in space as follows:

In the embodiment shown in Figs. 5 and 6, the handlebars support bores 11a and 12a are each made to incline laterally outwardly and upwardly relative to the central axis $X$ and longtudinally rearwardly of the cycle with respect to the axis of the handlebar stem 1 independently of its permanent inclination.

Loosening of the clamping bolt 30a permits rotation of the respective handlebars 2 and 3 in the direction of the arrow $Y$ in Fig. 8 from the position shown by the solid line in Figs. 8 and 9 so that the separation $l_1$ between the grip portions 2a and 3a of the respective handlebars 2 and 3, is made smaller than the original separation $l$ between the grip portions shown by the solid line and the height $h_1$ of each grip portion above the ground is made smaller than the original height $h$ of each grip portion shown by the solid line. This results in the grip portions 2a and 3a being displaced longitudinally rearwardly on the cycle, in other words, towards the rider thereby affording a smaller rider an equally comfortable and efficient steering attitude as to a larger one in the original position.

Conversely, when the respective handlebars 2 and 3 are rotated in the direction of the arrow $Z$ in Fig. 8 from the position shown by the solid line in Fig. 8 and 9, the separation $l_2$ between the grip portions 2a and 3a is increased relative to the original separation $l$ and the height $h_2$ of each grip portion above the ground being also increased relative to the original height $h$. This results in the grip portions being moved longitudinally forwards of the cycle, in other words, away from the cyclist thereby enabling a larger person also to steer the cycle in an easy handling posture.

Alternatively, the handlebar support bores 11, 12, 11a and 12a in the above described embodiments may be replaced by projections locatable inside the ends of respective ones of the handlebars 2 and 3.

Also, the above described abutment portions 13 and 14 of the handlebar support bores 11, 12, 11a and 12a may be omitted as shown in the handlebars of Fig. 10 wherein a wedge member 20b is used as the fixing means and the draw-up bolt is utilized as a screw member 30b for fixing the handlebars 2 and 3 into the handlebar support bores 11b and 12b.

In this case, at least one of the handlebar support means 10 and the wedge member 20b, is provided with a holding means which temporarily restrains the wedge member 20b against movement in the direction of tightening and holds it in the vicinity of the openings of the handlebar support bores 11b and 12b. This holding means, for example as shown in Figs. 11 and 12, comprises a horizontal screwthreaded throughbore 19 in one side of the handlebar support means 10 and a holding recess 24 in one side of the wedge member 20b, so that a stopper 7 formed of a resiliently deformable material, such as rubber, and having a bore 71 through which a set screw 60 screwthreadedly engageable with the through bore 19 extends, can be held within the holding bore 24. In use the set screw 60 engaged with the threaded bore 19 is inserted into the bore 71 of the stopper 7 and temporarily prohibits the wedge member 20b from moving in the tightening direction. The clamping member 30b then tightens the wedge member 20b via the resilient deformation of stopper 7.

An alternative form of holding means for the wedge member 20b (not shown) has at least one projection projecting inwardly from the inner surface of handlebar support means 10, and to one side of the wedge member 20b, a stopper held thereagainst and comprising a rubber plate or a leaf spring, the stopper being resiliently deformed by the projection thereby to hold the wedge member 20b. Also, the wedge member 20b may provide a stopper formed of rubber or a spring and projecting from the outer surface of the wedge member 20b, the stopper being resiliently deformed in contact with the inner surface of the handlebar support means 10 thereby to hold the wedge member 20b, or the handlebar support means 10 may have, for example, a pair of slits extending downwardly from the openings of the handlebar support bores 11b and 12b, so that engagement portions of the handlebar support means 10 between the slits are adapted to project inwardly of the handlebar support bores 11b and 12b and are resiliently deformed by the wedge member 20b, thereby holding the wedge member 20b with the aid of the resilient biasing force of each projecting portion. In other words various forms of holding means may be used without restriction to any particular type or form.

In Fig. 10 there is also shown a positioning mechanism 8 which sets each handlebar 2 or 3 in a desired angular position and comprises a plurality of first engagement portions 81 provided at each handlebar 2 or 3 at regular intervals in the direction of rotation of each handlebar 2, 3 and second engagement portions 82 are provided on the wedge member 20b for engagement each with one of the first engagement portions 81 on handlebar 2 or 3. The first engagement portions 81 shown in Fig. 10 comprise through bores provided at the end portions of the handlebars 2 and 3 which locate in the handlebar support bores 11b and 12b, the second engagement portions 82 comprising projections provided in the inclined faces 21 and 22 of the wedge member 20b.

In the above described construction, the left-hand and right-hand handlebars 2 and 3 are fixed to the handlebar stem 1 in such a way that the wedge member 20b holding the resilient stopper 7 is at first inserted in the handlebar support bores 11b and 12b of the handlebar support means 10, the tip of the set screw 60 engaging in the threaded bore 19 of the handlebar support means 10 is inserted into the through bore 71 of the resilient stopper 7 thereby to hold the wedgs member 20b in the vicinity of the openings of the handlebar support bores 11 and 12, and then the left-hand and right-hand handlebars 2 and 3 are fitted into the handlebar support bores 11b and 12b, moving along the inclined inner surfaces thereof, at which point the wedge member 20b held in the above position can positively restrain the handlebars 2 and 3 from moving under the influence of their own weight within the bores 11b and 12b and temporarily stop the handlebars 2 and 3. A screw member 30b is now inserted into the handlebar stem 1 through the stepped bore 23 of the wedge member 20b and screwthreadedly engages a draw-up wedge member (not shown) inserted into the lower portion of the handlebar stem 1. The wedge member 20b moves in the direction of being tightened as the screw member 30b screws forward, thereby deforming the stopper 7 to press the handlebars 2 and 3 against the inclined inner surfaces of the handlebar support bores 11b and 12b.

Also, in the case that the positioning mechanism 8 is provided as shown in Fig. 10, the left-hand and right-hand handlebars 2 and 3 are inserted one at a time into the handlebar support bores 11b and 12b.

As will be apparent from the above, the above described holding means provided at at least one of the handlebar support means 10 and the wedge member 20b, can easily temporarily restrain the left-hand and right-hand handlebars 2 and 3 in the vicinity of the openings of the handlebar support bores 11 and 12, and thereafter they are merely moved to be tightened, thereby fixing the handlebars 2 and 3 with ease and improving tractability of the handlebar mounting means.

The handlebars 2 and 3 are provided near the grip portions 2a and 3a with control levers for operating various operating mechamisms, such as brakes, of the cycle, the levers and actuators being connected via control cables. The control cables, when led through the handlebars 2 and 3 not to be exposed to the exterior, give rise to reduced air resistance, improved appearance, and avoid the danger of interference with external foreign bodies.

The handlebar support means 10 of the invention can readily provide through-bores 10a and 10b as shown in Figs. 13 and 14, so that the cables C can easily be led out from the through-bores 10a and 10b respectively.

Furthermore, the handlebar stem 1 is desirably made from a light alloy and moulded by die casting. Alternatively, a metallic pipe, as shown in Fig. 15, may be plastic-processed at its open end to integrally form a handlebar support means 10 having the handlebar support bores 11 and 12, or a metallic plate, as shown in Fig. 16, may be plastic-processed to be bent into a shape with an integrally formed handlebar support means, said Figures 15 and 16 illustrating further embodiments of the invention wherein, in accordance with the invention, the handlebar support "bores" 11 and 12 are inclined rearwardly longitudinally of the cycle as well as laterally outwardly thereof.

## Claims

1. A handlebars apparatus for a cycle comprising a handlebar stem (1) and a pair of cranked left-hand and right-hand handlebars (2, 3) with hand grip portions (2a, 3a), said handlebars stem (1) having at its upper portion a longitudinally extending handlebar support means (10) with handlebar support portions (11, 12) for mounting respective ones of said left-hand and right-hand handlebars (2, 3) so as to be rotationally adjustable about the longitudinal axis of the said handlebar support portions (11, 12), and having a fixing means (20, 30) for securing said left-hand and right-hand handlebars (2, 3) in desired angular positions relative to said handlebar stem (1), said handlebar support portions (11, 12) being inclined outwardly towards their upper portions away from each other either side of a central longitudinal axis (X) so as to support respective handlebar portions held therein extending at an angle from said central longitudinal axis (X) and from each other and being inclined rearwardly away from said central longitudinal axis (X) so as to extend longitudina:.y rearwardly relative to said bicycle in use of the apparatus so that rotational adjustment of the handlebars provides adjustment of both the width and height of the handlebars at said hand grip portions (2a, 3a) thereof characterized in that the said handlebar support portions (11, 12) are inclined rearwardly towards their upper portions whilst extending in generally the same direction as that in which said central handlebar stem (1) longitudinal axis extends so that said rotational adjustment of the said handlebars (2, 3) results in a simultaneous increase or decrease in both width and height.

2. Apparatus according to claim 1, wherein the angle of inclination of each of said handlebar support portions (11, 12) laterally outwardly is approximately 40° from the central longitudinal axis (X) of the handlebar stem (1), and their angle of inclination longitudinally rearwardly of the bicycle is from 15 to 25° from said central axis (X).

3. Apparatus according to claim 1 or claim 2, wherein said handlebar support portions of said handlebar support means (10) in which said left-hand and right-hand handlebars (2, 3) are mounted, comprise handlebar support bores (11, 12), said handlebar support bores (11, 12) being in communication with each other via groove or slot means (15) and wherein said fixing means comprises a wedge or cone member (20) disposed in said groove or slot means (15) and having a pair of inclined faces (21, 22) for abutment with respective opposed faces of said left-hand and right-hand handlebar portions held in respective ones of said handlebar support bores (11, 12) and a through-bore (23) extending through said wedge member (20) between said inclined faces (21, 22), and a clamping screw means (30) formed and arranged for driving said wedge member (20) in a direction towards said handlebar stem (1) so as to press said handlebar portions against the walls and abutment portions (13, 14) of said handlebar support bores (11, 12).

4. Apparatus according to claim 3 wherein at least one of said handlebar support means (10) and wedge member (20) has a holding means (7) engagable with the other of said support means (10) and wedge member (20) so as to temporarily restrain said wedge member (20) against movement in the direction of tightening and holds said wedge member (20) in the vicinity of openings of said handlebar support bores (11, 12) in the absence of said clamping screw means (30).

5. Apparatus according to claim 4, wherein said holding means comprises a resiliently deformable stopper (7) mounted on one of said handlebar support means (10) and said wedge member (20).

6. Apparatus according to claim 5, wherein said handlebar support means (10) has an engagement member (60) engagable with said stopper (7) supported on said wedge member (20) for temporarily restraining said wedge member (20) against movement.

7. Apparatus according to any one of claims 3 to 6, wherein said handlebar stem (1) includes a draw-up wedge or cone member (40) and a draw-up bolt (30) for advancing said wedge member (40) so as to secure said handlebar stem (1) in a front fork (FH) of a said cycle, said clamping screw means being constituted by said draw-up bolt (30).

8. Apparatus according to claim 1 or claim 2, wherein said handlebar support portions (11, 12) of said handlebar support means (10) in which said left-hand and right-hand handlebar portions are mounted, comprise handlebar support bores (11, 12) in communication with each other, said handlebar support means (10) having a transverse through-bore (17) at the communicating portion (15) of said handlebar support means (10), said fixing means comprising a bolt and nut means (not shown) disposed through said through-bore (17).

9. Apparatus according to claim 1, wherein is provided a positioning means (8) for locating said left-hand and right-hand handlebar portions in desired ones of a plurality of angularly spaced predetermined dispositions.

10. Apparatus according to claim 1, wherein said handlebar support means (10) has insertion (10a, 10b) through which control cables (C) for operating mechanisms of a said cycle can be led in use of the apparatus for conducting such control cables (C) through the interior of said left-hand and right-hand handlebars (2, 3), from said handlebar support means (10).

11. Apparatus according to any one of claims 1 to 10, wherein said handlebar support portions (11, 12) of said handlebar support means (10) are provided at their lower portions with abutment portions (13, 14) extending radially inwardly from the inner walls of said handlebar support portions (11, 12) for supporting respective ones of said left-hand and right-hand handlebars (2, 3) disposed in said handlebar support portions (11, 12).

**Patentansprüche**

1. Lenkstangenanordnung für ein Zweirad, bestehend aus einem Lenkstangenschaft (1) und einem Paar abgewinkelter linker und rechter Lenkstangen (2, 3) mit Handgriffen (2a, 3a), wobei der Lenkstangenschaft (1) an seinem oberen Teil eine in Längsrichtung sich erstreckende Lenkstangenhalterung (10) mit Lenkstangenaufnahmeteilen (11, 12) zur Befestigung je einer linken und rechten Lenkstange (2, 3) aufweist, so daß diese um die Längsachse der Lenkstangenaufnahmeteile (11, 12) drehbar einzustellen sind, und Befestigungsmittel (20, 30) zur Befestigung der linken und rechten Lenkstangen (2, 3) in gewünschten Winkelpositionen relativ zum Lenkstangenschaft (1) vorgesehen sind, wobei die Lenkstangenaufnahmeteile (11, 12) in ihrem oberen Bereich voneinander weg zu jeder Seite der zentralen Längsachse (X) hin nach außen geneigt sind, um die jeweiligen darin aufgenommenen Lenkstangen so zu halten, daß diese zur zentralen Längsachse (X) und zueinander in einem Winkel stehen, und daß die Lenkstangenaufnahmeteile zur zentralen Längsachse (X) nach rückwärts geneigt sind, so daß sie relativ zur Fahrtrichtung des Zweirades sich in Längsrichtung nach rückwärts erstrecken, so daß die Dreheinstellung der Lenkstangen sowohl eine Einstellung der Breite als auch der Höhe der Lenkstangen an den Handgriffen (2a, 3a) ermöglicht, dadurch gekennzeichnet, daß die Lenkstangenaufnahmeteile (11, 12) in Richtung auf ihre oberen Teile nach rückwärts geneigt sind, während sie sich im allgemeinen in die gleiche Richtung wie die Längsachse des Lenkstangenschaftes (1) erstrecken, so daß die Dreheinstellung der Lenkstange (2, 3) zu einer gleichzeitigen Vergrößerung oder Verringerung sowohl der Breite als auch der Höhe führt.

2. Lenkstangenanordnung nach Anspruch 1, dadurch gekennzeichnet, daß der Neigungswinkel jedes Lenkstangenaufnahmeteils (11, 12) seitlich nach außen etwa 40° zur zentralen Längsachse (X) des Lenkstangenschaftes (1) und der Neigungswinkel in Längsrichtung des Zweirades nach rückwärts 15—25° zur zentralen Achse (X) beträgt.

3. Anordnung nach Anspruch 1 oder 2, dadurch gekennzeichnet, daß die Lenkstangenaufnahmeteile der Lenkstangenhalterung (10), in denen die linke und rechte Lenkstange (2, 3) befestigt sind, Lenkstangenaufnahmebohrungen (11, 12) aufweisen, die mit einander über Nuten oder Schlitze (15) in Verbindung stehen, und die Befestigungsmittel einen Keil oder Konus (20) aufweisen, der in dem Schlitz oder der Nut (15) angeordnet ist und ein Paar geneigte Flächen (21, 22) zum Anliegen an den jeweiligen, gegenüberliegenden Flächen der linken und rechten Lenkstangen aufweist, die in den zugehörigen Bohrungen der Lenkstangenaufnahmebohrungen (11, 12) gehalten sind, und in dem Keil zwischen den geneigten Flächen (21, 22) eine Durchgangsbohrung (23) vorgesehen ist, und eine Spannschraube (30) ausgebildet und vorgesehen ist, um den Keil (20) in eine Richtung auf den Lenkstangenschaft (1) zu anzutreiben, um die Lenkstangen gegen die Wände und Anschlagteile (13, 14) der Lenkstangenaufnahmebohrungen (11, 12) zu drücken.

4. Anordnung nach Anspruch 3, dadurch gekennzeichnet, daß wenigstens die Lenkstangenhalterung (10) oder der Keil (20) ein Halteglied (7) aufweisen, welches mit dem jeweils anderen Teil, dem Keil oder der Lenkstangenhalterung, in Eingriff bringbar ist, so daß der Keil (20) zeitweilig gegen eine Bewegung in Befestigungsrichtung gehalten ist und der Keil (20) bei Abwesenheit der Spannschraube (30) in der Nähe der Öffnungen der Lenkstangenaufnahmebohrungen (11, 12) gehalten ist.

5. Anordnung nach Anspruch 4, dadurch gekennzeichnet, daß das Halteglied aus einem federnd verformbaren Stopper (7) besteht, der an der Lenkstangenhalterung (10) oder dem Keil (20) befestigt ist.

6. Anordnung nach Anspruch 5, dadurch gekennzeichnet, daß die Lenkstangenhalterung (10) ein Einrastelement (60) aufweist, welches mit dem Stopper (7) am Keil (20) zum zeitweiligen Verhindern einer Bewegung des Keils (20) zusammenwirkt.

7. Anordnung nach jedem der Ansprüche 3 bis 6, dadurch gekennzeichnet, daß der Lenkstangenschaft (1) einen Aufziehkeil oder—konus (40) und eine Aufziehschraube (30) zum Vortreiben des Keils (40) aufweist, um den Lenkstangenschaft (1) in einer vordergabel (FH) des Zweirades zu befestigen, wobei die Spannschraube durch diese Aufzeihschraube (30) gebildet ist.

8. Anordnung nach Anspruch 1 oder 2, dadurch gekennzeichnet, daß die Lenkstangenaufnahmeteile (11, 12) der Lenkstangenhalterung, in denen die linken und rechten Lenkstangenteile befestigt sind, miteinander in Verbindung stehende Lenkstangenaufnahmebohrungen (11, 12) aufweise, wobei die Lenkstangenhalterung (10) im Verbindungsteil (15) der Lenkstangenhalterung (20) ein querliegende Durchgangsbohrung (17) aufweist, und die (nicht dargestellten Befestigungsteile, bestehend aus Schraube und Mutter, durch die Durchgangsbohrung (17) geführt sind.

9. Anordnung nach Anspruch 1, dadurch gekennzeichnet, daß ein Positionierelement (8) zum Positionieren der linken und rechten Lenkstangenteile in der gewünschten Position von mehreren im Winkelabstand vorbestimmten Positionen vorgesehen ist.

10. Anordnung nach Anspruch 1, dadurch gekennzeichnet, daß die Lenkstangenhalterung (10) Aufnahmen (10a, 10b) aufweist, durch die Steuerkabel (C) zur Betätigung des Zweiradmechanismus geführt werden können, wenn die Anordnung als innere Führung solcher Steuerkabel (C) von der Lenkstangenhalterung (10) durch das Innere der linken und rechten Lenkstangen (2, 3) verwendet wird.

11. Anordnung nach jedem der Ansprüche 1—10, dadurch gekennzeichnet, daß die Lenkstangenhalterung (10) in ihrem unteren Teil mit Anschlägen (13, 14) versehen ist, die von den Innenwänden der Lenkstangenaufnahmeteile (11, 12) aus radial nach innen vorstehen, um die jeweiligen in den Lenkstangenaufnahmeteilen (11, 12) angeordneten linken und rechten Lenkstangen (2, 3) zu haltern.

## Revendications

1. Guidon pour bicyclette comprenant une tige de guidon (1) et deux éléments de guidon coudés gauche et droit (2, 3) minus de poignées (2a, 3a), ladite tige de guidon (1) comportant à sa partie supérieure des moyens (10) de maintien de guidon, disposés longitudinalement et présentant des parties (11, 12) de maintien de guidon pour la fixation d'une élément respectif desdits éléments de guidon gauche et droit (2, 3) de sortie que ces derniers peuvent être réglés en rotation autour de l'axe longitudinale desdites parties (11, 12) de maintien de guidon, et comportant des moyens de fixation (20, 30) pour bloquer les éléments de guidon gauche et droit (2, 3) dans des positions angulaires désirées par rapport à la tige de guidon (1), les parties (11, 12) de maintien de guidon étant inclinées vers l'extérieur vers leurs parties supérieures de manière à s'écarter l'une de l'autre de chaque côté d'un axe longitudinal central (X) afin de supporter les éléments de guidon respectifs ainsi tenus suivant un angle par rapport à l'axe longitudinal central (X) et l'un par rapport à l'autre, et étant inclinées vers l'arrière par rapport à l'axe longitudinal central (X) de manière à s'étendre longitudinalement vers l'arrière par rapport à une bicyclette ej position d'utilisation du dispositif de sorte qu'un réglage en rotation des éléments de guidon procure un réglage à la fois de la hauteur et de la largeur du guidon à l'endroit des ses poignées (2a, 3a), caractérisé en ce que lesdites parties (1, 12) de maintein de guidon sont inclinées vers l'arrière, vers leurs parties supérieures, tout en s'étendant sensiblement dans la même direction que celle dans laquelle s'étend l'axe longitudinal central de la tige de guidon (1), de sorte que ledit réglage en rotation des éléments de guidon (2, 3) provoque une augmentation ou une diminution simultanée à al fois de la largeur et de la hauteur.

2. Dispositif suivant la revendication 1, dans lequel l'angle d'inclinaison de chacune des parties (11, 12) de maintien de guidon, latéralement vers l'extérieur, est de 40° environ par rapport à l'axe longitudinal central (X) de la tige de guidon (1), et leur angle d'inclinaison longitudinalement et vers l'arrière de la bicyclette est de 15 à 25° par rapport audit axe central (X).

3. Dispositif suivant la revendication 1 ou la revendication 2, dans lequel les parties de maintien de guidon des moyens (10) de maintien de guidon, dans lesquelles sont montés les éléments de guidon gauche et droit (2, 3), comprennent des logements (11, 12) de maintien de guidon, ces logement (11, 12) de maintien de guidon étant en communication l'un avec l'autre par l'intermédiaire d'une gorge ou d'une fente (15), et dans lequel lesdits moyens de fixation comprennent uncoin ou un cône (20), disposé dans la gorge ou la fente (15) et présentant deux faces inclinées (21, 22) de butée avec des faces opposées respectives des éléments de guidon gauche et droit tenus dans des logements respectifs des dits logements (11, 12) de maintien de guidon et un trou traversant (23) qui traverse le coin (20) entre lesdites faces inclinées (21, 22), et une vis de blocage (30) prévue et disposée pour déplacer le coin (20) en direction de la tige de guidon (1) de manière à presser les éléments de guidon contre les parois et des parties de butée (13, 14) des logements (11, 12) de maintien de guidon.

4. Dispositif suivant la revendication 3, dans lequel au moins l'un parmi les moyens (10) de support de guidon et le coin (20) comporte des moyens de retenue (7) qui peuvent s'engager avec l'autre partie parmi les dits moyens de maintien (10) et le coin (20), de façon à arrêter temporairement le coin (20) contre un déplacement d.ns la direction de serrage et à retenir le coin (20) au voisinage des ouvertures des logements (11, 12) de maintien de guidon, en l'absence de la vis de blocage (30).

5. Dispositif suivant la revendication 4, dans lequel les moyens de retenue comprennent une pièce d'arrêt (7) élastiquement déformable, montée sur les moyens (10) de maintien de guidon ou sur le coin (20).

6. Dispositif suivant la revendication 5, dans lequel les moyens (10) de maintien de guidon comportent un élément de contact (60) qui peut s'engager avec unedite pièce d'arrêt (7) supportée sur le coin (20), pour empêcher momentanément le coin (20) de se déplacer.

7. Dispositif suivant l'une quelconque des revendications 3 à 6, dans lequel la tige de guidon (1) comprend un coin ou un cône de réglage (40) et une vis de réglage (30) pour rapprocher le coin (40) de manière à bloquer la tige de guidon (1) dans une fourche avant (FH) d'un bicyclette, lesdits moyens à vis de blocage étant constitués par cette vis de réglage (30).

8. Dispositif suivant la revendication 1 ou la revendication 2, dans lequel les parties (11, 12) de maintien de guidon des moyens (10) de maintien de guidon, dans lesquelles sont montés les éléments de guidon gauche et droit, comprennent des logements (11, 12) de maintien de guidon en communication l'un avec l'àutre, ces moyens (10) de maintien de guidon comportant un trou traversant transversal (17) dans la partie de communication (15) des moyens (10) de maintien de guidon, lesdits moyens de fixation comprenant un boulon (non représenté) disposé dans le trou traversant (17).

9. Dispositif suivant la revendication 1, dans lequel il est prévu des moyens de positionnement (8) pour situer les éléments de guidon gauche et droit dans des positions désirées parmi une pluralité de positions angulairement espacées prédéterminées.

10. Dispositif suivant la revendication 1, dans lequel les moyens (10) de maintien de guidon comportent un orifice (10a, 10b) par lequel des câbles de commande (C) pour des mécanismes de manoeuvre d'une bicyclette peuvent être guidés en utilisation du dispositif, de manière à faire passer ces câbles de commande (C) à l'intérieur des éléments de guidon gauche et droit (2, 3), à partir des moyens (10) de maintien de guidon.

11. Dispositif suivant l'une quelconque des revendications 1 à 10, dans lequel les parties (11, 12) de maintien de guidon des moyens (10) de maintien de guidon comportent, à leurs parties inférieures, des parties de butée (13, 14) s'étendant radialement vers l'intérieur à partir des parois intérieures des parties (11, 12) de maintien de guidon, pour supporter les éléments respectifs des éléments de guidon gauche et droit (2, 3) disposés dans les parties (11, 12) de maintien de guidon.

FIG. 1

FIG.2

FIG.3

FIG.4

FIG.5

FIG.6

FIG.9

FIG.7

FIG.8

FIG.10

FIG.11

FIG.12

XI⌐

XI⌐

20b  23

2

3

21

22

11b

81

8  82

81

82  8

10

1

30b

44

23

19

20b

60

71

7

7

10

24

30b

1

71

2

7

20b

23

21

22

24

11b

19

12b

10

1

0 072 688

FIG.13

FIG.15

FIG.14

FIG.16

4